# DEMANDE DE BREVET EUROPEEN

(11) **EP 0 580 457 A1**
(43) Date de publication de la demande: **26.01.1994**
(21) Numéro de dépôt: 93401342.6
(22) Date de dépôt: 26.05.1993
(51) Int. Cl.: H04B 3/54

(54) **Méthode et système de transmission d'informations et de signaux analogiques et/ou numériques à large bande utilisant le réseau de distribution de l'énergie électrique comme support de transmission**

(30) Priorité: 27.05.1992 FR 9206468
(71) Demandeur: Koubi, Denis Albert, F-75018 Paris (FR); Bouya, Omar, F-78800 Houilles (FR); Dutertre, Yvon Marie-André Auguste, F-35690 Acigne (FR)
(72) Inventeur: Koubi, Denis Albert, F-75018 Paris (FR); Bouya, Omar, F-78800 Houilles (FR); Dutertre, Yvon Marie-André Auguste, F-35690 Acigne (FR)

(57) **Abrégé**

L'invention concerne une méthode de transmission d'informations et de signaux analogiques et/ou numériques à large bande utilisant le réseau de distribution de l'énergie électrique comme support de transmission et un système mettant en oeuvre cette méthode.

Le système de transmission proposé est caractérisé par le fait qu'il comprend notamment, au niveau de chaque compteur électrique individuel (CDD), un système de blocage sélectif de fréquences (CFB) permettant ainsi de définir des réseaux individuels (RIN) et des réseaux collectifs (RCO) ainsi qu'un dispositif d'interfaçage faisant fonction d'injecteur et/ou d'extracteur (INJ) d'informations à chaque point terminal du réseau.

L'invention est utilisable dans les réseaux multiservices de type privé et/ou collectif et professionnel.

## Description

La présente invention a pour objet une méthode de transmission d'informations et de signaux analogiques et/ou numériques à large bande utilisant le réseau de distribution de l'énergie électrique comme support de transmission, et un système mettant en oeuvre cette méthode. Elle est applicable dans les réseaux multiservices de type privé et/ou collectif et professionnel.

L'utilisation du réseau électrique comme support de transmission des signaux à faible bande passante étant connue et sortant en outre du cadre de l'invention ne sera donc pas décrite.

La demande de brevet déposée le 13 Octobre 1989 sous le numéro PCT/GB89/01220 et publiée le 19 Avril 1990 sous le numéro WO 90/04306 concerne un système de transmission de signaux vidéo sur le réseau de distribution électrique qui fait appel, soit à un traitement numérique du signal, soit à une modulation en amplitude d'une porteuse. Ce système présente l'inconvénient d'être très sensible aux parasites, de nécessiter une puissance d'émission relativement importante et donc d'augmenter le rayonnement parasite produit. En outre, la demande de brevet précitée ne fait pas mention d'un dispositif quelconque de confidentialité : les informations circulent librement sur le réseau d'un appartement à l'autre et peuvent donc être reçues même par des personnes et/ou des installations non destinataires.

Un tel système ne peut donc pas donner satisfaction.

La présente invention a donc pour objet une méthode de transmission d'informations et de signaux analogiques et/ou numériques à large bande utilisant le réseau de distribution de l'énergie électrique comme support de transmission ainsi qu'un système mettant en oeuvre cette méthode et palliant les inconvénients précités. Pour ce faire, le système proposé introduit la notion de réseau global multiservices interactif incluant la transmission de signaux vidéo sur courant porteur. Il utilise la modulation de fréquence et il comprend, notamment, un dispositif de filtrage sélectif des fréquences, permettant ainsi de définir un réseau individuel (c'est-à-dire confiné à l'intérieur d'une cellule de base, un appartement, par exemple) et un réseau collectif (c'est-à-dire un ensemble de cellules de base, un immeuble selon l'exemple choisi précédemment).

La méthode de transmission de l'invention est caractérisée par le fait qu'elle consiste à allouer à chaque canal de transmission une gamme de fréquences prédéterminées, à transmettre lesdits signaux selon le principe de la modulation de fréquence, et à sélectionner et aiguiller les signaux transmis à l'aide de circuits de filtrage et de circuits mélangeurs.

Le système mettant en oeuvre la méthode de l'invention est caractérisé par le fait qu'il comprend notamment, au niveau de chaque compteur électrique individuel, un système de blocage sélectif de fréquences permettant ainsi de définir des réseaux individuels et des réseaux collectifs.

Une autre caractéristique du système de l'invention réside dans le fait qu'il comprend en outre un dispositif d'interfaçage faisant fonction d'injecteur et/ou d'extracteur d'informations à chaque point terminal du réseau.

Une autre caractéristique du système de l'invention réside dans le fait que lesdits dispositifs d'injection et/ou d'extraction d'informations se composent d'un transformateur large bande et d'un filtre d'antiparasitage connectés au réseau par l'intermédiaire d'une liaison capacitive.

Les différents objets et caractéristiques de l'invention seront maintenant détaillés dans la description qui va suivre, donnée à titre d'exemple non limitatif, en se reportant aux figures annexées qui représentent :
- la figure 1, un schéma illustrant un exemple de répartition des fréquences utilisées dans un système de transmission d'information par courant porteur conçu conformément à la présente invention ;
- la figure 2, un schéma illustrant un exemple de configuration d'un réseau local privé (utilisation domestique personnelle) conçu conformément à la présente invention ;
- la figure 3, un schéma illustrant un exemple de configuration d'un réseau collectif (services communs ) conçu conformément à la présente invention ;
- la figure 4, un schéma illustrant un exemple de réalisation d'une installation dans une cellule de base (appartement) du réseau collectif de la figure 3;
- la figure 5, un exemple de réalisation d'une commande de plaque de rue du réseau collectif de la figure 3.

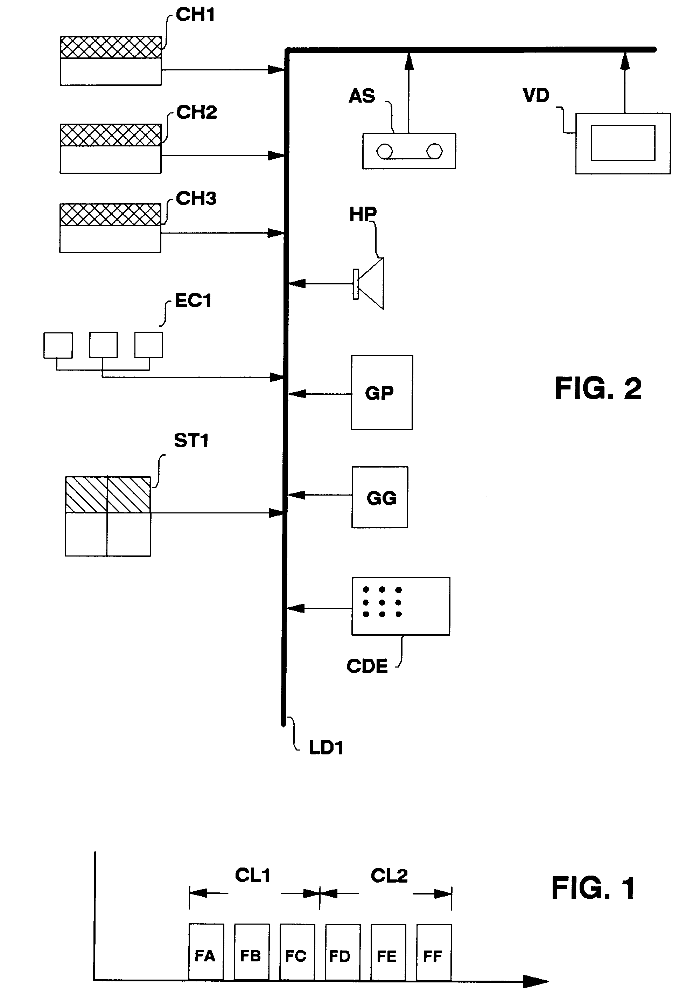

On décrira tout d'abord, en se reportant aux schémas des figures 1 à 3, la méthode de transmission d'informations par courant porteur de l'invention.

La méthode de transmission d'informations de l'invention consiste à utiliser le réseau électrique privé comme bus bidirectionnel et réparti pour transmettre des signaux audio, vidéo et de commande, ce réseau étant géré par un organe intelligent qui peut être placé à un point quelconque de ce réseau. La transmission de ces signaux est réalisée par une modulation en fréquence d'une porteuse, les fréquences utilisées étant toujours inférieures à 15 MHz.

Ces fréquences sont réparties, selon l'exemple choisi et comme le montre le schéma de la figure 1, en deux classes de trois gammes de fréquences: la classe CL1 comprend les gammes de fréquences FA, FB et FC affectées au réseau individuel, c'est-à-dire, à la cellule de base qui, selon le cas d'utilisation choisi, est un appartement. Comme on le verra par la suite, ces trois fréquences nous permettront de constituer un réseau à trois canaux de transmission, chaque fréquence étant affectée respectivement à un canal particulier.

La classe CL2 comprend de la même façon trois gammes de fréquences FD, FE et FF affectées au réseau collectif, c'est-à-dire à un immeuble selon l'exemple choisi.

De cette façon, chaque utilisateur particulier aura accès à son réseau local privé pour une utilisation domestique personnelle, et au réseau collectif pour les services communs mis à la disposition de tous les utilisateurs de la collectivité, tous les occupants de l'immeuble selon l'exemple choisi.

Le schéma de la figure 2 illustre un exemple de configuration d'un tel réseau local privé. On va en donner une description succincte.

Le réseau local privé, ou réseau individuel, de la figure 2 comprend notamment un dispositif de diffusion sonore, un dispositif de régulation de chauffage, ou plus généralement de climatisation, un dispositif de surveillance et d'alarme et diverses télécommandes.

Le dispositif de diffusion sonore se compose d'une source sonore, qui peut être un programme enregistré, par exemple, sur une bande magnétique installée dans un système de lecture tel un magnétophone, ou bien un récepteur de radiodiffusion positionné sur un émetteur présélectionné et un ensemble de diffusion tels des haut-parleurs. Ce dispositif est symboliquement représenté sur le schéma de la figure 2 par un lecteur de bande AS.

Le dispositif de climatisation se compose, par exemple, d'éléments CH1, CH2 et CH3 qui peuvent être des radiateurs ou des appareils de climatisation de type connu.

La centrale de surveillance et d'alarme comprend notamment un dispositif de portier électronique avec gâche électrique associé à un ensemble de surveillance vidéo par caméra de télévision. Cette centrale est illustrée par un haut-parleur HP, des circuits de commande GP et GG de gâches de portes et/ou de portails, et un récepteur de télévision VD.

Le réseau de la figure 2 comprend en outre diverses télécommandes illustrées par une installation d'éclairage EC1 et un store à commande électrique ST1.

Tous ces dispositifs ainsi qu'un boîtier de commande CDE sont connectés à une ligne de distribution d'énergie électrique LD1 par l'intermédiaire de circuits d'interfaçage, doté chacun d'une adresse propre (code individuel) afin que les messages transmis ne soient reçus que par les terminaux destinataires.

Le réseau local de la figure 2 est alors géré par un organe intelligent, une unité centrale de traitement non représentée, qui peut être placé à un point quelconque de l'installation. Cette unité centrale est commandée à partir du boîtier de commande CDE disposé également à un point quelconque du réseau. A chaque appareil susceptible de perturber la transmission des informations et signaux de commande est associé un circuit de filtrage à haute impédance garantissant un fonctionnement correct de l'installation.

La transmission des informations numériques, telles que celles utilisées dans les fonctions de commandes et de surveillance, est effectuée selon un protocole comprenant notamment, l'envoi d'un message et/ou sa répétition et/ou l'interrogation de l'équipement terminal concerné et/ou l'exploration cyclique des terminaux concernés afin de s'assurer de la transmission effective des messages qui leur ont été envoyés.

La diffusion sonore, dans le cas d'une diffusion stéréophonique haute fidélité, s'effectue sur une seule porteuse selon le procédé de codage utilisé en transmission hertzienne en modulation de fréquence. Dans le cas d'une diffusion monophonique, la seconde voie alors libérée sera de préférence utilisée pour transmettre des signaux numériques de commande et/ou de surveillance.

Dans le réseau de la figure 2 on peut convenir que, par exemple, les fréquences de la gamme FA sont utilisées pour la transmission des signaux audio (diffusion sonore), les fréquences de la gamme FB sont pour la transmission des signaux de commande et les fréquences de la gamme FC pour la transmission des signaux vidéo (télésurveillance).

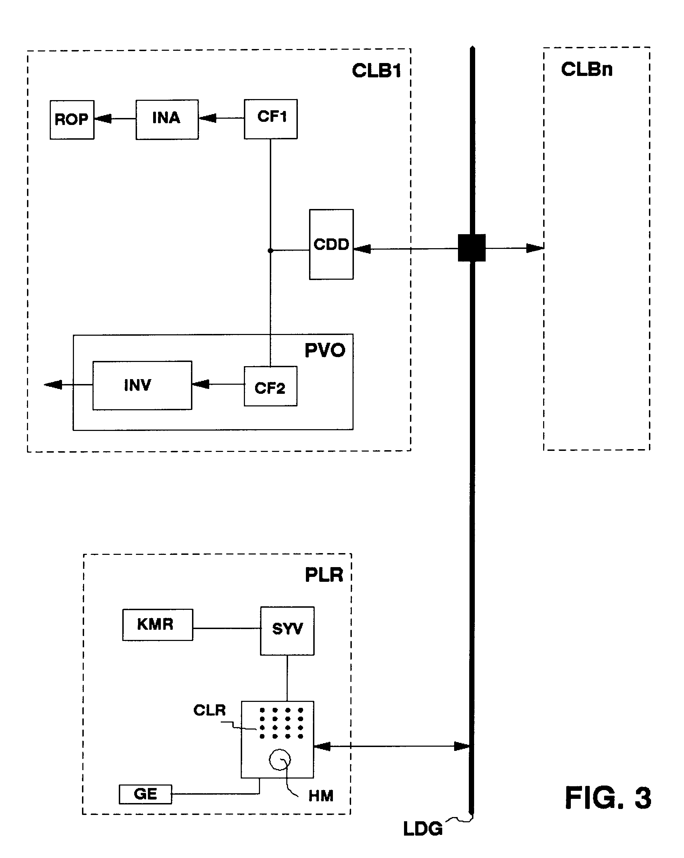

On décrira maintenant, en se reportant au schéma de la figure 3, un exemple de configuration d'un réseau collectif conçu conformément à la présente invention et utilisé pour les services communs mis à la disposition de tous les utilisateurs de la collectivité, tous les occupants de l'immeuble selon l'exemple choisi.

Le réseau collectif de la figure 3 est conçu pour être utilisé par n cellules de base ou appartements CLB1 à CLBn connectés à la ligne de distribution d'énergie électrique LDG. Pour des raisons de simplification on supposera que les services communs se composent uniquement des services liés à un portier électronique, c'est-à-dire à un ensemble permettant à un visiteur d'appeler, depuis la porte de l'immeuble, l'occupant de l'un des appartements CLB1 à CLBn, ce dernier et lui seul étant alors en mesure d'identifier l'appelant grâce à un circuit de télévision composé d'une caméra extérieure et de récepteurs intérieurs, d'entrer en communication avec ce visiteur, et d'actionner la gâche de la porte de l'immeuble au moyen d'une commande intérieure, toute ces opérations étant effectuées à l'insu des autres occupants non concernés de l'immeuble.

Le schéma de la figure 3 comprend donc également un équipement extérieur ou plaque de rue PLR connecté à la ligne de distribution d'énergie électrique LDG. Cet équipement se compose exclusivement d'un ensemble vidéo comprenant une camera vidéo KMR et des circuits associés SYV, d'un circuit d'appel comprenant un clavier CLR composé par exemple d'une touche d'appel par appartement, d'un groupe de touches numériques permettant l'introduction d'une combinaison confidentielle commandant directement l'ouverture de la porte par actionnement d'une gâche électrique GE, et d'un transducteur HM faisant fonction de microphone et de haut-parleur.

L'équipement intérieur associé à chaque appartement comprend notamment une partie audio et une partie vidéo PVO qui peut être optionnelle. La partie audio comprend un circuit CF1 de filtrage et d'aiguillage des fréquences audio connecté entre un compteur électrique CDD associé à l'appartement concerné (ce compteur pouvant être installé à l'extérieur de l'appartement) et un circuit d'interface audio INA. La sortie de cette interface INA est connectée à une entrée non référencée d'un circuit ROP de réception et de commande d'ouverture de la gâche électrique GE. Ce circuit est de type connu et ne sera pas décrit. On rappellera seulement qu'il peut se composer, par exemple, d'un combiné de type téléphonique à sonnerie d'appel incorporée permettant d'entrer en communication avec toute personne appelant à l'aide du clavier CLR.

La partie vidéo se compose d'une interface vidéo INV connectée entre un récepteur de télévision ou un moniteur non représenté, et la ligne de distribution d'énergie LDG via un circuit de filtrage CF2 intercalé entre cet interface INV et le compteur électrique CDD.

Ainsi, grâce aux circuits de filtrage CF1 et CF2, les informations transmises sur la ligne LDG sont retransmises aux interfaces audio et vidéo de l'appartement concerné et seulement à ceux-ci à cause du code confidentiel.

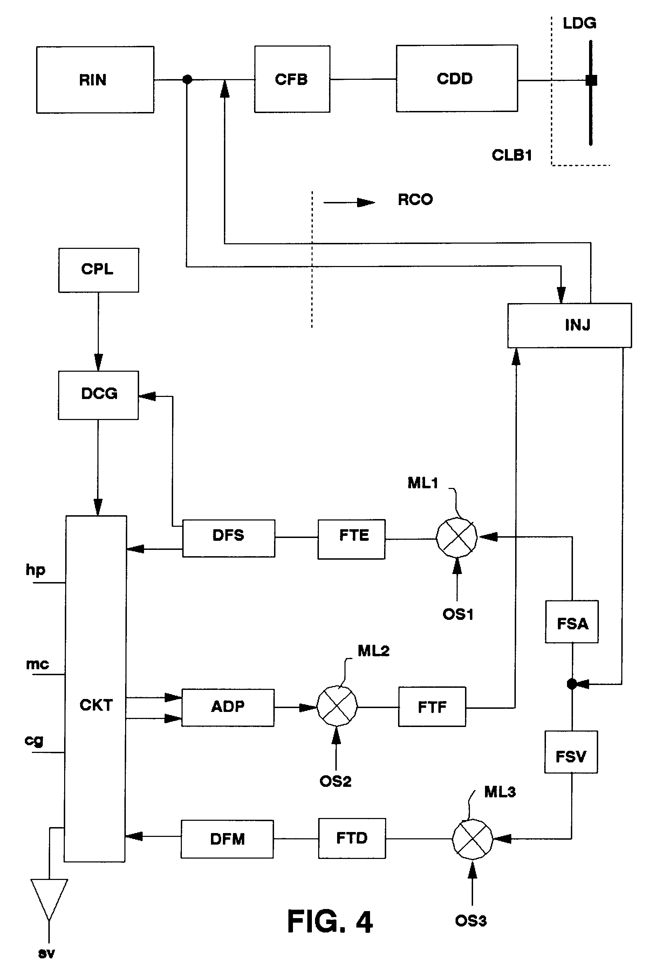

On décrira maintenant, en se reportant au schéma de la figure 4, un exemple de réalisation de l'installation du réseau collectif dans la cellule de base (appartement) CLB1 du schéma de la figure 3.

Comme on l'a fait précédemment pour le réseau local de la figure 2, on conviendra que, dans le réseau collectif de la figure 4, les fréquences de la gamme FD seront utilisées pour la transmission des signaux vidéo, celles de la gamme FE pour la transmission des signaux audio sur deux voies (stéréophoniques), et celles de la gamme FF pour la transmission des signaux de commande.

Le réseau collectif RCO de l'appartement CLB1 de la figure 4 est connecté au compteur électrique CDD via un circuit de filtrage et de blocage sélectif de fréquences CFB, ce circuit permettant par ailleurs de définir des réseaux individuels et le réseau collectif RCO. Ce réseau comprend notamment un circuit d'injection et d'extraction INJ qui retransmet des informations dans le réseau individuel RIN connecté à la sortie du circuit de filtrage et de blocage CFB et qui reçoit des informations retransmises sur la ligne de distribution d'énergie de l'immeuble LDG via le circuit de filtrage et de blocage CFB.

Ces dernières informations sont fournies à une entrée respective de circuits de filtrage et de séparation FSA et FSV qui retransmettent respectivement les fréquences audio et vidéo à une entrée de circuits mélangeurs ML1 et ML3 respectivement commandés par des signaux de fréquence OS1 et OS3.

Une sortie du circuit mélangeur ML1 est connectée à une entrée d'un filtre FTE qui ne retransmet que les signaux dont la fréquence est comprise dans la gamme FE (voir figure 1). Cette gamme de fréquences étant affectée à la transmission sur deux voies, une sortie du filtre FTE est connectée à une entrée d'un circuit DFS de démodulation des signaux modulés en fréquence et de séparation des deux voies. Lorsque les signaux reçus par ce circuit de démodulation sont des signaux audio stéréophoniques utilisant ces deux voies, les signaux alors séparés sont retransmis à un ou plusieurs transducteurs (haut-parleurs) hp via un circuit de commutation CKT. Lorsque les signaux reçus par le circuit de démodulation DFS sont des signaux audio occupant une voie et, par exemple, des signaux numériques de signalisation issus du clavier extérieur CLR et identifiant l'appartement concerné transmis sur l'autre voie, le circuit DFS aiguille ces derniers vers un circuit de décodage DCG, les signaux audio étant comme précédemment retransmis via le circuit de commutation CKT. Le circuit de décodage DCG compare les signaux numériques de signalisation avec le code introduit dans le circuit de code personnel CPL par l'occupant de l'appartement et, en cas d'identité, commande l'ouverture des portes du circuit de commutation CKT. Ce circuit retransmet alors les signaux qu'il reçoit vers les organes destinataires.

De la même façon, les signaux vidéo sélectionnés par le circuit de filtrage FSV sont retransmis à un ou plusieurs récepteurs télévision (ou moniteurs) sv via le mélangeur ML3, un filtre FTD, un démodulateur DFM et le circuit de commutation CKT. Comme dans le cas précédent, le filtre FTD ne retransmet que les fréquences comprises dans la gamme FD réservées, selon l'exemple choisi, pour la transmission des signaux vidéo.

De manière similaire, les signaux de commande d'ouverture de la gâche électrique GE de la porte de l'immeuble, ainsi que les courants vocaux destinés au transducteur HM de la plaque de rue PLR (figure 3), issus respectivement des circuits cg et mc, sont transmis par le circuit de commutation CKT, un circuit d'adaptation ou mélangeur stéréophonique ADP qui transpose sur une seule voie ces deux types de signaux, un mélangeur ML2 commandé par des signaux OS2, un circuit de filtrage FTF qui ne retransmet que les fréquences comprise dans la gamme FF, le circuit d'injection et d'extraction INJ, le circuit de filtrage et de blocage, le compteur CDD et la ligne de distribution d'énergie LGD.

On voit donc que, grâce notamment aux différents filtres de sélection CFB, FTE, FTF et FTD aux circuits mélangeurs ML1, ML2 et ML3, et surtout grâce au code confidentiel fourni au circuit de décodage DCG qui ne commande l'ouverture des portes du circuit de commutation CKT que s'il reçoit un code identique issu du clavier extérieur CLR, les informations véhiculées par la ligne de distribution d'énergie LGD n'atteignent que les organes récepteurs destinataires. Le système proposé assure donc bien une confidentialité absolue.

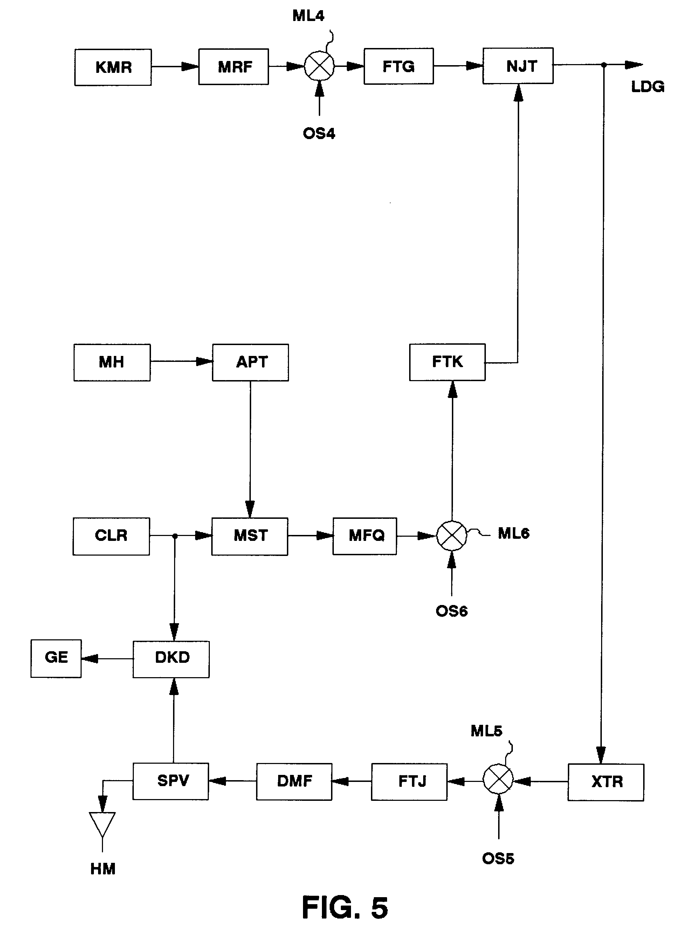

On décrira maintenant, en se reportant au schéma de la figure 5, un exemple de réalisation d'une commande de plaque de rue du réseau collectif de la figure 3.

On retrouve sur le schéma de la figure 5 la caméra vidéo KMR, la gâche électrique GE et le clavier CLR de la figure 3.

Les signaux vidéo de sortie de la caméra KMR sont injectés sur la ligne de distribution d'énergie générale LDG par l'intermédiaire d'un circuit de modulation en fréquence MRF, d'un mélangeur ML4 commandé par des signaux OS4, d'un circuit de filtrage FTG, qui ne retransmet que les signaux dont la fréquence est comprise dans la gamme FD, comme on l'a vu précédemment (figures 1 et 4), et un circuit d'injection NJT.

Les signaux de parole issus d'un appartement et véhiculés par la ligne de distribution LDG sont retransmis au transducteur (haut-parleur) HM de la plaque PLR par l'intermédiaire d'un extracteur XTR, d'un mélangeur ML5 commandé par des signaux OS5, d'un circuit de filtrage FTJ, qui ne retransmet que les signaux dont la fréquence est comprise dans la gamme FF comme on l'a vu précédemment (figures 1 et 4), un démodulateur DMF de signaux modulés en fréquence et d'un circuit SPV séparateur de voies. Ce séparateur SPV retransmet les signaux de commande qu'il reçoit, signaux destinés à la commande de la gâche électrique GE, à un circuit de décodage DKD dont la sortie est connectée à cette gâche GE.

Les signaux de commande de la gâche GE issus du clavier CLR sont retransmis directement à la gâche GE par l'intermédiaire de ce circuit de décodage DKD.

Les signaux d'appel sélectif d'un appartement déterminé issus du clavier CLR de la plaque de rue PLR sont transmis à l'équipement destinataire par l'intermédiaire d'un mélangeur stéréophonique MST, d'un circuit de modulation en fréquence MFQ, d'un mélangeur ML6 commandé par des signaux OS6, d'un circuit de filtrage FTK, qui ne retransmet que les signaux dont la fréquence est comprise dans la gamme FE comme on l'a vu précédemment (figures 1 et 4), et du circuit d'injection NJT.

Les signaux de parole issus du transducteur (microphone) MH sont retransmis de la même façon en étant fournis au mélangeur stéréophonique MST via un circuit d'adaptation APT.

On voit que, grâce notamment aux différents filtres de sélection FTG, FTJ et FTK et aux circuits mélangeurs ML4, ML5 et ML6, les informations issues de la plaque de rue PLR ou adressées aux circuits de cette plaque ne seront injectées sur la ligne de distribution d'énergie LGD que si leurs fréquences correspondent aux fréquences allouées à ce réseau collectif, cette discrimination se faisant au niveau des signaux de commande OS4 à OS6 des mélangeurs ML4 à ML6.

Comme on l'a vu dans la description qui précède, ces informations sont ensuite fournies à l'entrée de toutes les installations individuelles (figure 4) mais ne sont accessibles qu'à celle dont le circuit de commutation CKT a été rendu passant par le circuit de décodage DCG qui a reçu le code qui convenait.

Les circuits d'injection et/ou d'extraction INJ, NJT et XTR qui sont, comme on vient de le voir, des dispositifs d'interfaçage disposés à chaque point terminal du réseau, se composent d'un transformateur large bande réalisant l'isolation galvanique et d'un filtre d'atténuation des parasites présents sur la ligne de distribution d'énergie LDG. Cet ensemble est connecté au réseau via une liaison capacitive.

Le système que l'on vient de décrire répond donc bien aux critères exigés : les informations émises ne sont transmises que si elles proviennent d'une source autorisée. Elles ne sont alors transmises qu'aux circuits et organes destinataires à l'exclusion de tout autre. Le système de transmission est bidirectionnel et son installation ne nécessite aucun câblage général supplémentaire, les informations étant véhiculées par le réseau de distribution de l'énergie électrique existant et les circuits nouveaux pouvant aisément être installés au niveau des prises d'alimentation des appareils à commander et/ou au niveau du compteur électrique, du disjoncteur différentiel associé ou des tableaux de répartition et de coupure de l'installation.

Dans la description qui précède on a implicitement supposé que la distribution de l'énergie électrique s'effectuait en monophasé. Dans le cas d'une distribution générale dans l'immeuble en courant triphasé, l'alimentation des appartements concernés se faisant en monophasé, c'est-à-dire entre un conducteur neutre et un conducteur de phase, la phase distribuée peut être différente d'un appartement à l'autre. On transmet alors les informations au niveau du réseau collectif entre le neutre et la terre. Dans chaque appartement, la terre n'est pas disponible dans toutes les pièces. On relie donc, au niveau des signaux de haute fréquence, la phase de l'appartement concerné au conducteur de terre par l'intermédiaire d'une liaison capacitive. On s'affranchit ainsi de l'identité des phases distribuées.

## Revendications

**1 -** Méthode de transmission d'informations et de signaux analogiques et/ou numériques à large bande utilisant le réseau de distribution de l'énergie électrique comme support de transmission, caractérisée en ce qu'elle consiste notamment à allouer à chaque canal de transmission une gamme de fréquences (FA, FB, FC, FF) prédéterminées, à transmettre lesdits signaux selon le principe de la modulation de fréquence, et à sélectionner et aiguiller les signaux transmis à l'aide de circuits de filtrage (FTD, FTE, FTF, FTG, FTJ, FTK) et de circuits mélangeurs (ML1-ML6)

**2 -** Système de transmission d'informations et de signaux analogiques et/ou numériques à large bande utilisant le réseau de distribution de l'énergie électrique comme support de transmission et mettant en oeuvre la méthode décrite en 1, caractérisé par le fait qu'il comprend notamment, au niveau de chaque compteur électrique individuel (CDD), un système de blocage sélectif de fréquences (CFB) permettant ainsi de définir des réseaux individuels (RIN) et des réseaux collectifs (RCO).

**3 -** Système de transmission d'informations et de signaux analogiques et/ou numériques à large bande tel que défini en 2, caractérisé par le fait qu'il comprend également un dispositif d'interfaçage faisant fonction d'injecteur (INJ, NJT) et/ou d'extracteur (XTR) d'informations à chaque point terminal du réseau.

**4 -** Système de transmission d'informations et de signaux analogiques et/ou numériques à large bande tel que défini en 2, caractérisé par le fait que lesdits dispositifs d'injection (INJ, NJT) et/ou d'extraction (XTR) d'informations se composent d'un transformateur large bande et d'un filtre d'antiparasitage connectés au réseau par l'intermédiaire d'une liaison capacitive.

**5 -** Système de transmission d'informations et de signaux analogiques et/ou numériques à large bande tel que défini en 2, caractérisé par le fait qu'il comprend des moyens pour transmettre lesdites informations entre les conducteurs de neutre et de terre dans un réseau collectif à distribution d'énergie sur trois phases et ces mêmes informations entre le conducteur de neutre et le conducteur de la phase quelconque du réseau individuel.
